# EUROPEAN PATENT SPECIFICATION

(11) **EP 0 598 158 B1**
(45) Date of publication and mention of the grant of the patent: **29.07.1998**
(21) Application number: 92500149.7
(22) Date of filing: 16.11.1992
(51) Int. Cl.: B44B 5/00, G09F 7/16, B44C 3/00, B44C 3/08, B60R 13/10

(54) **Process for the production of multilayered embossed plates, in particular indication panels or vehicle plates**
Verfahren zur Herstellung von mehrschichtigen geprägten Platten, insbesondere Anzeigetafeln oder KFZ-Kennzeichenschilder
Procédé pour la production de plaques embouties multicouches, en particulier panneaux indicatifs ou plaques d'immatriculation

(43) Date of publication of application: 25.05.1994
(73) Proprietor: INDUSTRIAS SAMAR'T, S.A., E-17740 Vilafant (Girona) (ES)
(72) Inventor: Casadevall, Enrique Sanchez c/oINDUSTRIAS SAMAR'T,, E-17740 Vilanfant (Girona) (ES)
(74) Representative: Alonso Langle, Emilio

(56) References cited:
- DE-A- 3 610 379
- FR-A- 2 003 512
- FR-A- 2 642 360
- FR-A- 2 672 553
- PATENT ABSTRACTS OF JAPAN vol. 15, no. 318 (M-1146)14 August 1991 & JP-A-3 118 154 ( TOPPAN PRINTING CO LTD ) 20 May 1991
- PATENT ABSTRACTS OF JAPAN vol. 15, no. 471 (P-1282)28 November 1991 & JP-A-3 202 788 ( TANABE KOGYO KK ) 4 September 1991

## Description

### SUBJECT OF THE INVENTION

The subject of this invention is a process for contrasted signs using high-relief characters, specifically for signs made from a compound plate whose base is pressed, and the outer part of which can be removed, being made up of a strip joined to said base, which may be covered with strips or simply with a coat of coloured or other paint.

Said compound plates must, once pressed to form the high-relief characters, be contrasted, i.e. the area in high relief must appear with a different colour from the remainder so that, from a distance, the signs or letters are easily read.

One example of signs of this type is seen with motor vehicle registration plates and, by extension, road signs.

### THE STATE OF THE ART

French patent no. 129816 of November 27 1967 proposes a process for the manufacture of registration plates which include parts in relief over a surface of another colour.

According to the process described in that patent, two metal plates are joined together with the first, on the contact surface with the second, of a different colour from the outer or visible surface of said second plate.

Said first and second plates are welded or cemented together along their edges or by folding the edges of one plate over the other.

This plate is then formed using a press with male pressing dies and with female plates on the dolly. This operation can also be carried out in reverse, as long as the press shapes the first plate over the second.

The pressing dies must be designed so as to deform only the first plate and not the second: said second plate is therefore cut down on the first, silhouetting the pressed area so that the pressed part emerges around the cut part.

Because, as already pointed out, the first plate is a different colour from the second, when the forming of the first plate protrudes through the cut made to the second, a relief is formed with the latter which, depending on the shape of the dies, creates a letter, sign or number. By this means, it is easy to compose a registration plate and indeed a sign on which the visible front surface of the pressed part is of a different colour from the background plate through which it protrudes.

There is a major drawback with this type of plate when the characters include a number 8, for example, or a letter B, insofar as, in the case of the former, because the central part of the zero is insufficiently secured, it comes away and the sign shown is difficult to interpret.

Notwithstanding this serious disadvantage, the process is in fact valid because the solution is simple and practical in comparison with the traditional methods for making a painted or pressed registration plate from a plate painted with a background colour and then painted manually on the front of the pressed numbers and letters. It is not surprising then that a solution should be sought which makes it possible to implement the solution put forward in the French patent, overcoming its serious drawback. On this aspect, mention may be made of French patent no. 69/44749, which proposes an ingenious solution whereby between the first and second plate there is a permanent adhesive layer ensuring that the two plates are inseparable, so that the cut unpressed parts are secured on the lower or base plate without spoiling the sign or letter.

The problem is that the removal of the cut part is costly, because of the adhesive which secures it to the base plate: however, once the cuts have been removed, the result is excellent for a French registration plate, although not so for registrations plates of other countries.

In fact, the relief on French registration plates is in a metallic colour, specifically that of the aluminium base plate: as a result, the relief is not affected when the cut front is removed. However, in the case of a registration plate in another country, such as Spain, where the law requires a reflecting white background and letters and numbers in black, the process put forward in the French patent is not valid because, when the cut is removed, the paint on the base plate comes away with it. Otherwise, it is not possible to remove the cut element.

To overcome this aspect of French patent no. 69/44749, an addition is proposed to Spanish patent no. 464,672, whereby a layer of mould release agent is placed between the base or first plate and the second plate, to prevent them from adhering permanently and so facilitating the removal of the part which is cut in the pressing. Nonetheless this solution does not prevent the second plate from coming away completely, with the passage of time.

In a search for a solution to the problem, Spanish patent no. 424,206 proposes that the exterior plate be secured to the base plate by a heat-activated adhesive i.e. creating a join which may nor may not be released and which is effective at room temperature: however, once pressing is completed, the assembly is placed in an oven and the adhesive is activated to permanently join the plate and strip together.

This process does however make it significantly more expensive and complicated to make sign plates, as the handler (the workshop where the plates are pressed) must acquire an oven which makes it possible to fix the adhesive and form the permanent join between the plate and strip: moreover, the oven not only requires space which is unlikely to be available, and consumes energy, but also implies a suitable installation for absorbing the gases produced by the evaporation of substances and solvents in the adhesive.

Finally, in Spanish Patent no. 2019533, the inventor here proposes an ingenious solution: a permanent adhesive is placed on the base plate once the contrasting colour has been painted, i.e. the colour which will show the number, sign or letter following forming by serigraphy or engraving while, on the second plate, a non-permanent adhesive is added in the area not coinciding with the former.

Clearly, this can also be done in reverse, but it is a fact that this solution is no more than a compromise: while it has certain advantages, there are drawbacks such as the removal by the permanent adhesive of points or areas of paint from the pressed characters revealed when the cut part is removed, or the non-permanent adhesive gathers dust and dirt to the detriment of clarity.

Spanish patent no. 2028617, of the same applicant and inventor, puts forward a rational solution to this matter, proposing a pressed registration plate and signs made using a process developed with a base element of a plate which may be metallic or malleable thermoplastic, with a permanent adhesive strip whose exposed side is covered by a white reflecting surface as required under Spanish law on motor vehicle registration plates, of any other colour pursuant to regulations in other countries, or of any suitable colour used to make signs.

Irrespective of its nature, said base plate is in all cases covered by a coloured or transparent coating.

Even if the base plate is aluminium and so of a silver colour for the pressed markings, as required for example under the French regulations, the plate is covered by such a coloured or transparent coating.

One of the benefits of this invention, and fundamental to it, is that the coating over the base plate is mixed with an anti-adhesive of any type, e.g. vinyl fluoride or silicone, in a proportion which does not alter the paint covering properties, so that the paint can subsequently be dried at higher temperature, keeping its surface quality and gloss and any colour.

Once the coating is dry, cooling takes place, followed by the bonding of the strip forming the second plate on the base, so that the assembly is ready for pressing and formation of the alphanumber identification, whether a registration plate or a sign or, indeed, an image, formed with the appropriate set of punches.

Once the cut part on the front of the pressed elements is removed, the result is of the highest quality and finish, because the covered surface of the base plate which emerges through the cut parts silhouetting the protrusions caused by the pressing is clean, anti-adherent to dust and with a stable and uniform chromatic effect.

A similar process is proposed in Spanish patent no. 2028630 where the anti-adhesive is included in the adhesive itself which joins to the base plate, covered with a coloured or transparent coating on the strip which forms the exterior part.

The result may be equated with that of the other patent, and is a valid alternative process.

In both cases, the problem is that, if a small amount of mould release agent is used, not only is it easy to remove the cut parts but also the strips; on the contrary, if the strip is too strongly bound to the plate, it is impossible to remove the cut part and so the desired effect cannot be obtained.

### DESCRIPTION OF THE INVENTION

The criterion in this invention for defining the adherence or bond strength between a base plate and the outer strip is taken as that at which the base plate strip is essential, even if the assembly is folded, rolled, braced, bent, twisted, turned or corrugated, or subject to any possible physical deformation as a result of combinations thereof.

A registration plate or a road sign made by these means clearly has a serious drawback: the removal of the cut caused by pressing, i.e. to form the contrast which identifies the pressed form, eliminating the cut part and revealing the colour of the base plate on its covered surface.

It must be made clear that the anti-adhesive is retained, whether added to the finishing paint or to the bonding adhesive: however, the proportion is defined according to the abovementioned condition that it is not be separated by mechanical deformation.

Once the compound plate is made and the characters pressed, the process according to the invention involves the application of heat, for preference just to the part in high-relief and, while hot, for that part alone to be attacked, along multiple lines of movement, using the ends of single or multiple filament fibres or thermoplastic barbs grouped in bunches or simply mounted on one or more supports which rotate on their own axes vertically or horizontally and are displayed sideways under self-regulated pressure.

In short, the aim is to work on the heated outer strip and, with the heat, to activate the anti-adhesive effect between the two, and to break up, release and remove just the outer layer from the part in high relief.

The adherence capacity between the outer strip and the face on which it is mounted is more than the release capacity arising when the assembly undergoes physical deformation and more than the malleability coefficient of the assembly.

The notion of attack should not be underestimated since that is precisely what is required, not abrasion, wear or machining to progressively remove the filings, nor a disc similar to a tapered grinder or cutter: the aim is to break up and remove the outer strip, in a localised way, while it is hot, without damaging the lower layer or paint coating of the base.

This is an essential condition and, therefore, defines a major parameter: the temperature applied to the high relief is lower than that which might lead to a softening of the base plate coating.

The unit made by these means, individualised and contrasted, is resistant to any mechanical deformation and all types of weather conditions, and guarantees excellent permanence, including high pressure washing which, in some cases, is as much as ten atms., without affecting the plate by removing part or all of the outer strip.

The state of the art offers a variety of solutions for the approach to a mechanical resolution of the process described in this description: this document therefore refers only superficially to this aspect since the inventive activity and the merit of the invention reside in the process and not in the means by which to implement it.

Infra-red or hot air facilities can be used to provide heat, while the mechanical attack on the high relief can make use of circular brushes which not only turn on their own axes in opposite directions but also, for example, are displaced sideways.

The brush pressure is defined by counterweights, springs or any other means, and the assembly is mounted in a housing which also contains movement components which can displace the sign or registration plate in the heat and brush area.

It should be noted that the attack capacity of the ends of the fibres is less than the hardness of the paint coating of the base

It is not felt necessary to offer further emphasis in order for an expert in the field to implement this invention once familiar with the content of the Specifications and the technique described here is in use.

The design conditions themselves determine the parameters: any example would have to be forced in order to indicate temperatures and pressure which would not be real if any of the components used were to be varied. However, the conditions established will be met whenever the process is implemented successfully, so that the description of the invention is not illustrated with examples and/or drawings.

## Claims

1. A process for contrasted signs with characters in high relief where said sign is made up of a compound plate whose base is coated in coloured or other paint on which an outer strip is bound using adhesive and, whether in the paint or in the adhesive, incorporating an anti-adhesive substance, characterized in that the adherence capacity between the outer strip and the face on which it is mounted is more than the release capacity arising when the assembly undergoes physical deformation and more than the malleability coefficient of the assembly, and in that, heat is applied in at least the high relief area of the compound plate, the heat activating the anti-adhesive effect between the base and the outer strip and, while hot, breaking up and removing just the said outer strip from the said area in high relief by means of thermoplastic barbs or single- or multiple-filament fibres protruding from one or more supports which rotate on their own axes vertically or horizontally and are displaced sideways under self-regulated pressure.

2. A procces for contrasted signs with characters in high relief as set forth in the previous claim, characterized in that the heat applied is not so great as to soften or affect the paint coating of the base.

3. A procces for contrasted signs with characters in high relief as set forth in the previous claims, characterized in that the attack capacity of the ends of the fibres is less than the hardness of the paint coating of the base.

## Patentansprüche

1. Verfahren zur Erhaltung von abgehobenen Zeichen, mit einem Schriftbild in Hochrelief, bei dem das genannte Zeichen aus einer Verbundplatte besteht, deren Basis mit einem farbigen Anstrich oder einem Anstrich anderer Art überzogen ist und auf die mit Hilfe von Klebstoff ein Band geklebt wird, wobei dem Band bzw. dem Klebstoff ein Klebrigkeitsverhinderungsmittel hinzugefügt wird, dadurch gekennzeichnet, dass die Klebekraft zwischen dem äusseren Band und der Oberfläche, auf der das genannte Band montiert wird, grösser ist als die Kraft zur Befreiung oder Ablösung, die auftritt, wenn die Gesamtanordnung eine physische Verformung erfährt, und grösser als der Geschmeidigkeitskoeffizient der Gesamtanordnung, und dass in wenigstens einem Bereich in Hochrelief der zusammengesetzten Platte Wärme angewandt wird, wobei diese Wärme die Wirkung des Klebrigkeitsverhinderungsmittels zwischen der Basis und dem äusseren Band aktiviert und, nach Erwärmung, das genannte äussere Band von dem genannten Bereich in Hochrelief löst und abzieht, mittels thermoplastischen Graten oder mittels Fasern aus Mono- oder Multifilament, die aus einem oder mehreren Auflagen herausragen, welche vertikal und horizontal um ihre eigenen Achsen drehen und seitlich unter einem selbstreguliertem Druck verfahren werden.

2. Verfahren zur Erhaltung von abgehobenen Zeichen, mit einem Schriftbild in Hochrelief entsprechend dem vorgehenden Anspruch, dadurch gekennzeichnet, dass die angewandte Wärme nicht genügend gross ist, um den Farbauftrag der Basis zu erweichen oder in Mitleidenschaft zu ziehen.

3. Verfahren zur Erhaltung von abgehobenen Zeichen, mit einem Schriftbild in Hochrelief entsprechend den vorgehenden Ansprüchen, dadurch gekennzeichnet, dass die Angriffsfähigkeit der Faserenden geringer ist als die Festigkeit des Farbauftrags der Basis.

## Revendications

1. Un procédé pour obtenir des signes contrastés avec des caractères en haut-relief où ledit signe est constitué d'une plaque composée dont la base est revêtue de peinture en couleur ou de tout autre type sur laquelle est collée une bande externe en utilisant de l'adhésif et en incorporant, bien à la peinture ou bien à l'adhésif une substance anti-adhésive, caracterisé en ce que la capacité d'adhérence entre la bande externe et la face sur laquelle elle est montée est supérieure à la capacité de libération qui a lieu lorsque l'ensemble subit une déformation physique et supérieure au coefficient de malléabilité de l'ensemble, et en ce que la chaleur est au moins appliquée dans la zone en haut-relief de la plaque composée, la chaleur activant l'effet anti-adhésif entre la base et la bande externe, et lorsqu'elle est, la chaleur rompt et retire úniquement ladite bande externe de ladite zone en haut-relief au moyen de languettes thermoplastiques ou de fibres mono- ou multifilaments qui sortent d'un ou plusieurs supports qui tournent sur leurs propres axes verticalement ou horizontalement et qui se déplacent latéralement sous une presion autorégulée.

2. Un procédé pour obtenir des signes contrastés avec des caractères en haut-relief selon la revendication antérieure, caractérisé en ce que la chaleur appliquée n'arrive pas à ramollir ou à affecter le revêtement de peinture de la base.

3. Un procédé pour obtenir des signes contrastés avec des caractères en haut-relief selon les revendications antérieures, caractérisé en ce que la capacité d'attaque des extrémités des fibres est inférieure à la dureté du revêtement de peinture de la base.
